# EUROPEAN PATENT SPECIFICATION

(11) **EP 3 340 514 B1**
(45) Date of publication and mention of the grant of the patent: **12.05.2021**
(21) Application number: 16206119.6
(22) Date of filing: 22.12.2016
(51) Int. Cl.: H04L 1/16

(54) **COMMUNICATION SYSTEM AND METHODS**
KOMMUNIKATIONSSYSTEME UND -VERFAHREN
SYSTÈME ET PROCÉDÉS DE COMMUNICATIONS

(43) Date of publication of application: 27.06.2018
(73) Proprietor: MaxLinear Asia Singapore Private Limited, Singapore (SG)
(72) Inventor: SINGH, Ravindra, 560049 Bangalore (IN); DEKA, Dhruba, 560066 Bangalore (IN)
(74) Representative: Sticht, Andreas

(56) References cited:
- EP-A2- 2 680 476
- US-A1- 2009 089 638
- US-A1- 2012 201 256
- US-A1- 2015 171 992

## Description

The present application relates to communication devices, systems and methods.

### BACKGROUND

Communication devices and systems use physical links to transmit and receive data. Such physical links may be wire-based communication links or wireless communication links. Generally, each physical link can be defined by a protocol it supports and its capabilities like bandwidth or loop reach. In wire-based communication, each physical link may be associated with a separate wire connection. For example, in digital subscriber line communication like the VDSL or G.fast a physical link may be characterized by a number of bits it carries per second and the distance it can support between communicating devices.

Modern communication services have demanded an ever increasing bandwidth. One approach has been to increase the bandwidth over a single physical link, which led for example to development of digital subscriber line (DSL) standards with increasing bandwidth, for example from ADSL via VDSL up to G.fast. Another possibility is to use multiple physical links simultaneously between two devices, which is also referred to as bonding, and the links thus used are referred to as bonded links. Bonding is defined in various ITU-T recommendations for various DSL types like ADSL2+, VDSL or G.fast.

The basic concept used in such bonding is to break data units to be transmitted into so-called fragments, that are tagged with a respective sequence number and distributed among the bonded physical links. A receiving entity reassembles the fragments based on the sequence numbers to combine them into the original data units.

One challenge of this concept is to handle the variation of transmission delays among the bonded links. When one physical link has a higher transmission delay (i.e. is a comparatively slower physical link), fragments arriving on the other physical links (comparatively faster links) cannot be processed until the fragment having a next needed sequence number is arriving on the slower physical link. Thus the receiving entity needs to buffer the fragments arriving on faster physical links until needed fragments on slower physical links have arrived. The dimension of the buffer needed depends on the variation of delay between the slowest and the fastest physical link, also referred to as differential delay. The needed buffer size may become quite significant when the system experiences high differential delays and individual data rates on the physical links are high.

In some communication systems like some DSL systems, retransmission is used to correct errors introduced for example by impulse noise on physical links. Such retransmission, where a data unit or other data entity comprising a fragment which was not transmitted directly is resent, may further increase the differential delay, thus requiring even larger buffers.

US 2015/171992 A1 discloses a communication device using bonding. In case of an error causing retransmission on a first one of a plurality of bonded links, retransmission is also caused in other bonded links.

A further transmission system using retransmission is known from EP 2 680 476 A2.

### BRIEF DESCRIPTION OF THE DRAWINGS

Fig. 1 is a block diagram of a communication system according to an embodiment.
Fig. 2 is a block diagram of a communications system according to a further embodiment.
Fig. 3 is a block diagram of part of a communication systems for illustrating some techniques of some embodiments.
Fig. 4 is a flowchart illustrating a method according to an embodiment.
Fig. 5 is a block diagram of a part of a communication system for illustrating techniques used in some embodiments.
Fig. 6 is a diagram illustrating data transmission according to some embodiments.
Fig. 7 is a flowchart illustrating a method according to an embodiment.
Fig. 8 is a block diagram of a part of a communication system illustrating some techniques of some embodiments.

### DETAILED DESCRIPTION

In the following, various embodiments will be described in detail referring to the attached drawings. These embodiments are given for illustrative purposes and are not to be construed as limiting. For example, while embodiments may be described as comprising a plurality of features or elements, in other embodiments some of the features or elements may be omitted, and/or may be replaced by alternative features or elements. Furthermore, apart from the features or elements explicitly described herein or shown in the drawings, further features or elements may be provided, for example features or elements used in conventional communication systems and devices. The invention is set out in the appended set of claims.

Communication systems as described herein may be wireless communication system or wire-based communication systems. Wire-based communication systems or devices may for example be digital subscriber line (DSL) systems devices. DSL, as used herein, is intended to refer to any one of a plurality of available DSL flavors, like ADSL, ADSL2, VDSL or G.fast. These DSL flavors are defined in the respective ITU-T recommendations, for example as listed in ITU-T series G supplement 50 as of September 2011. To give some examples, G.fast is for example defined in G.997.2 as of May 2015, G.9700 as of September 2016 (amendment 1) or G.9701 as of July 2016 (amendment 2) and VDSL is defined in G.993.1 of June 2004. Besides being mentioned in some of the aforementioned standards, retransmission as for example used in some embodiments is defined in G.998.4 as of January 2015. Bonding as used in some embodiments is also defined in various ITU-T standards, for example G.998.1-3 as in force December 2016. Unless noted to the contrary, terms used herein may have the meaning they have in the aforementioned standards as in force December 2016.

In some embodiments, bonding is used to increase bandwidth between communication devices. In some embodiments, when an error is detected on one of a plurality of bonded physical links (plurality meaning two or more) which leads to retransmission, this error is "propagated" to one or more other links of the plurality of bonded physical links to introduce delays in the other links. In this way, in some embodiments an overall differential delay which otherwise would result from retransmission on only the physical link where the error was detected may be reduced. In other embodiments, other techniques may be employed.

A physical link as used herein refers to a wire-based are wire-line link between two entities over which data may be sent, wherein the sending of the data itself may be independent from other links. Independent in this respect may mean that parameters like bit rates, etc. are independent between the links. In case of bonding, data is fragmented, i.e. distributed between the links. A physical link as used herein can be defined by the protocol it supports and its capabilities like bandwidth or loop reach, as already explained.

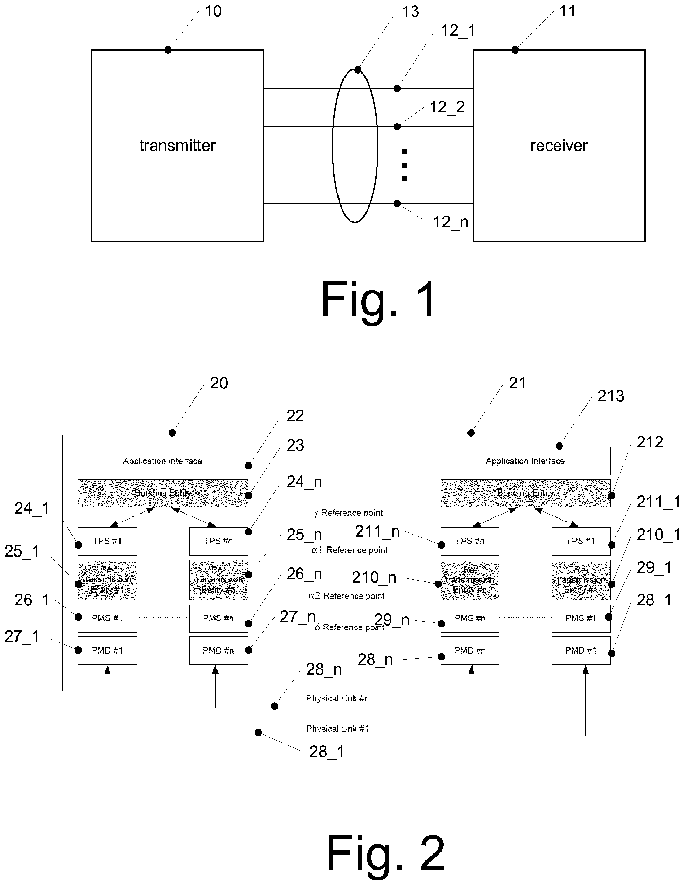

Turning now to the Figures, Fig. 1 illustrates a communication system according to an embodiment. The communication system of Fig. 1 comprises a transmitter 10 and a receiver 11 communicating over a plurality of physical links 12_1, 12_2 ... 12_n, which may be bonded as indicated by a circle 13 to provide an overall a higher bandwidth for transmitting data from transmitter 10 to receiver 11. It should be noted that the number of bonded links 12_1 to 12_n, collectively referred to as bonded links 12, is not restricted in any particular way and may be any number greater than 1, i.e. 2 or more.

It should be noted that while for ease of explanation Fig. 1 shows an unidirectional data transmission between a transmitter 10 and a receiver 11, in other embodiments bidirectional data transmission may be used, such that each of devices 10, 11 comprises a transmitter and a receiver with the corresponding circuitry like modulators, drivers, digital and analog signal processing, filters etc. Both transmission directions or only one transmission direction may use bonding and/or techniques discussed herein. For ease of explanation, referring to Fig. 1 and referring to other Figures, transmission will be explained only for one transmission direction. In the respective other transmission direction, the same or different techniques may be employed.

The communication system of Fig. 1 may employ retransmission. In the embodiment of Fig. 1, when in one of the bonded links 12 an error is detected which causes retransmission (for example an error not correctable by other means like forward error correction), this error is propagated to other links to e.g. also cause retransmission in other links in some embodiments. In this way, delays are caused not only in the link where the error occurred, but also in the other links. This in some implementations helps to limit the differential delay and thus a buffer size required for buffering data fragments at receiver 11.

These and other techniques will now be explained in more detail referring to Figs. 2 to 8.

Fig. 2 illustrates a more detailed block diagram of a communication system according to an embodiment. The communication system of Fig. 2 may for example be a DSL communication system, but is not limited thereto. The communication system of Fig. 2 is a bidirectional communication system, where a first communication device 20 communicates with a second communication device 21 via a plurality of physical links 28_1 to 28_n (n equal to or greater than 2). The block diagram of Fig. 2 may in particular be seen as a functional model of data transmission including retransmission in DSL systems.

Communication device 20 may for example be located on a service provider side, for example in a central office or other provider equipment like a digital subscriber line access multiplexer (DSLAM) or a street cabinet, and communication device 21 may be provided on a customer site and therefore be part of customer premises equipment (CPE).

In the following, a situation where data is transmitted from communication device 20 communication device 21 is described. Communication in the opposite direction from communication device 21 to communication device 20 may be performed in the same manner and will not be described separately.

An application interface 22 receives data to be transmitted from an application which requires to transmit data and provides the data as data units to a bonding entity 23. Bonding entity 23 separates the data units into data fragments and provides the data fragments with sequence numbers and then distributes the data fragments to a plurality of transmit paths corresponding to the plurality of physical links 28. Each transmit path comprises a transport protocol specific (TPS) layer 24 (24_1 to 24_n), a retransmission entity 25 (retransmission entity 25_1 to 25_n), a physical medium specific (PMS) layer 26 (26_1 to 26_n) (PMS-TC, transmission convergence) and a physical medium dependent (PMD) layer 27 (27_1 to 27_n). Layers 24 to 27 are sublayers of the physical layer in the OSI layer model and, apart from error propagation functions as will be explained below, may be implemented using any conventional manner using hardware like signal processing circuits, digital signal processors, buffers, filters or amplifiers, application-specific integrated circuits, firmware, software or combinations thereof. The layers may for example add a checksum and/or may provide forward error correction (FEC) and modulate the data as data symbols or other data entities onto carriers, for example a plurality of subcarriers on the respective physical link 28 in DSL. Each data symbol may comprise one or more data fragments or parts thereof or also only part of a data fragment, depending on the implementation. In the context of DSL, the fragments may be sent as data transfer units (DTUs).

At communication device 21, the fragments are then received via physical links 28 at separate receive paths, each comprising a physical media dependent (PMD) layer 28 (28_1 to 28_n), a physical media specific (PMS) layer 29 (29_1 to 29_n), a retransmission entity 210 (210_1 to 210_n), and a transport protocol specific (TPS) layer 211 (211_1 to 211_n). Again, apart from error propagation functions described, these layers may be implemented in any conventional manner using hardware, software, firmware or combinations thereof.

A bonding entity 212 of device 21 receives the received fragments from the receive paths and reassembles them to data units based on the sequence numbers and forwards the data units to an application interface 213. Application interface 213 then provides the data units to applications for which they are intended. Furthermore, in Fig. 2 γ, α1, α2 and δ reference points are shown between the layer according to usual DSL nomenclature.

In the reverse communication direction from device 21 to device 10, data fragments are transmitted using paths 28-211 as transmit paths and paths 24 to 27 as receive paths.

For each data entity (e.g. symbols) received, when the data entity is received correctly a corresponding acknowledgement (ACK) is sent on the respective physical link. In case an uncorrectable error occurs, for example due to impulse noise, a non-acknowledgement (NACK) is sent by the respective retransmission entity 210. Upon receipt of such a non-acknowledgement, the respective retransmission entity 25 on transmitter side retransmits the data entity which was not received correctly. This may be done according to any conventional retransmission scheme.

Furthermore, and in addition to conventional retransmission schemes, in embodiments such an error detected on one of the physical links is propagated to the other physical links, on transmitter side and/or on receiver side, to cause a delay at least approximately corresponding to the delay caused by the retransmission also in other physical links.

For example, the error propagation may cause retransmission also on other physical links where no actual error occurred, thus causing at least approximately equal delays in all physical links. In other embodiments, such delays on other physical links apart from the one where the error occurred may be introduced in any other manner, for example through a delaying of sending of data entities. Examples for such error propagation will be discussed later in more detail. In some embodiments, this error propagation may reduce a need for a large buffer in bonding entity 212 for buffering received fragments, as the maximum possible differential delay may be reduced in some implementations.

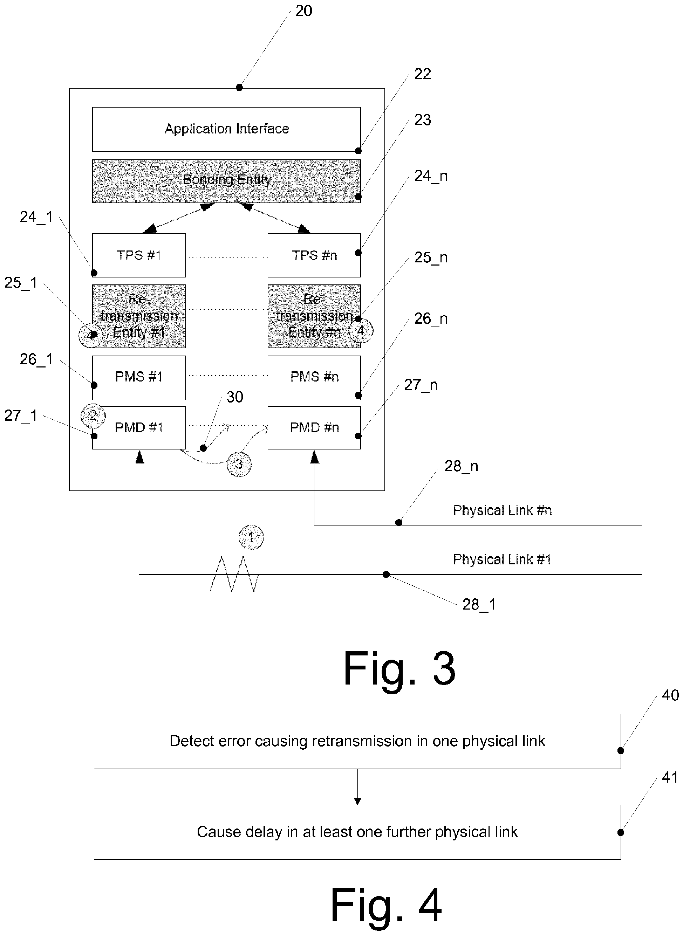

An example for such error propagation will be now discussed with reference to Fig. 3. In Fig. 3, it is assumed that first communication device 20 of Fig. 2 acts as a receiver, such that communication device 21 of Fig. 2 (not shown in Fig. 3, see Fig. 2) transmits data to communication device 20.

In Fig. 3, as indicated by a numeral 1, impulse noise or any other disturbance acts on physical link 28_1, causing an uncorrectable corruption of a data entity transmitted on physical link 28_1. This causes a corresponding retransmission entity 25_1 to send a non-acknowledgement (NACK). By receiving this NACK from retransmission entity 25_1 for sending PMD as indicated by numeral 2 layer 27_1 detects the error. As indicated by numeral 3 and arrows 30, PMD 27_1 then propagates this error to other PMDs (e.g. 27_n), which deliberately corrupt data entities they receive. This causes a NACK to be sent on the respective physical links and a corresponding retransmission, and therefore a delay similar to the delay caused by the retransmission following the impulse noise on physical link 28_1. This can be seen as introducing artificial impulse noise in all bonded physical links. The error propagation may in some implementation use a physical side band signal. In this way, differential delays between physical links are minimized. It should be noted that such an error propagation also in other embodiments may be performed at a transmitter side. To this end, for example when a retransmission entity on a transmitter side receives a NACK causing retransmission, it may cause other retransmission entities of other links to also cause retransmission. Further possibilities for error propagation will be discussed later in more detail.

It should be noted that in DSL communication error detection and propagation as shown in Fig. 3 may be performed in the frequency domain (i.e. after inverse Fourier transform) or in the time domain before fast Fourier transform. In embodiments, as illustrated by arrows 30 in Fig. 4, error detection and propagation occurs below the retransmission and bonding layers, such that no change of these layers is necessary for implementing the error propagation techniques disclosed herein. Nevertheless, in other embodiments error propagation may also be performed in higher layers.

In DSL systems or other systems using Viterbi codes, errors may be detected using such Viterbi codes, and propagated by distributing a Viterbi score status among other bonded physical links. In other embodiments, impulse noise may be detected in the time domain by detecting the energy of signals arriving (as impulse noise causes a higher signal energy, the impulse noise adding to the overall energy), and this information may be distributed among the bonded links. Fig. 4 is a flowchart illustrating a method according to an embodiment. The method illustrated in Fig. 4 may be implemented in the systems and devices discussed with reference to Figs. 1 to 3, but is not limited thereto.

At 40, the method comprises detecting an error causing retransmission (i.e. an error that is not correctable by measures like redundancy encoding or the like) in one physical link of a plurality of bonded links. At 41, the method comprises causing a delay in at least one further physical link of the plurality of bonded links in response to the detecting of the error at 40. Causing the delay may for example comprise causing an error which in turn causes a retransmission in the at least one further physical link, or otherwise delaying transmission in the at least one further physical link. In some embodiments, this may reduce a required buffer size.

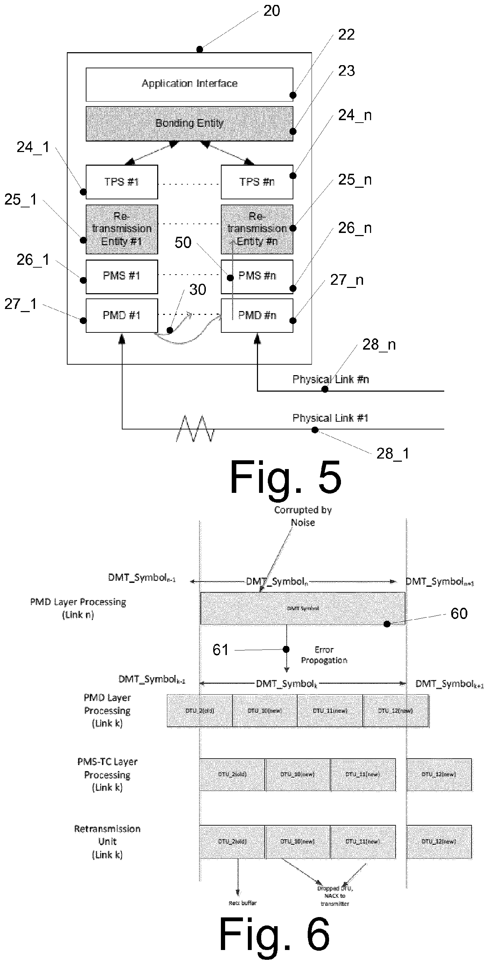

Further examples for implementation of an error propagation in case an error is detected in one physical link of a plurality of bonded links will now be discussed referring to Figs. 5 through 8.

One possibility for error propagation is to "blindly" inject artificial noise after the PMD layer 27 in non-corrupted bonded physical links, if one physical link experiences an error. In this case, all data fragments, e.g. data transmission units in corresponding data entities like symbols will be corrupted and requested for retransmission. This approach may not to be efficient in cases where the non-corrupted bonded links receive retransmitted data entities anyway during this retransmission, as in this case already retransmitted data entities are artificially corrupted, which may lead e.g. to timeouts if an allowed number of retransmissions is exceeded.

In another implementation, the error propagation may be evaluated on the retransmission entity level 25, as symbolized by an arrow 50 in Fig. 5. Otherwise, Fig. 5 corresponds to Fig. 3, and similar elements bear the same reference numerals and will not be described again in detail. The retransmission entity in such an embodiment may e.g. maintain status parameters, e.g. three parameters, namely reliability score of the PMD layer from the corrupted bonded links, PMS layer status (Reed Solomon decoder status, CRC checksum status, if used) and sequence ID of data transmission unit sent. Using these three parameters, in an embodiment the retransmission entity determines whether the data transmission unit needs to be stored in its retransmission buffer and an acknowledge signal (ACK) sent to the transmitter or the data transmission unit will be dropped at this level and a non-acknowledgement (NACK) is sent triggering retransmission.

The reliability score of the PMD layer is either a good reliability score a (i.e. no problems on the respective physical links) or a bad reliability score (indicating that the physical link is corrupted). The PMS-TC layer status in embodiments gives a CRC/Reed Solomon decoder status of the data entity. The sequence ID of the data entity determines if the data entity is retransmitted (i.e. is an old data entity) or a new data entity.

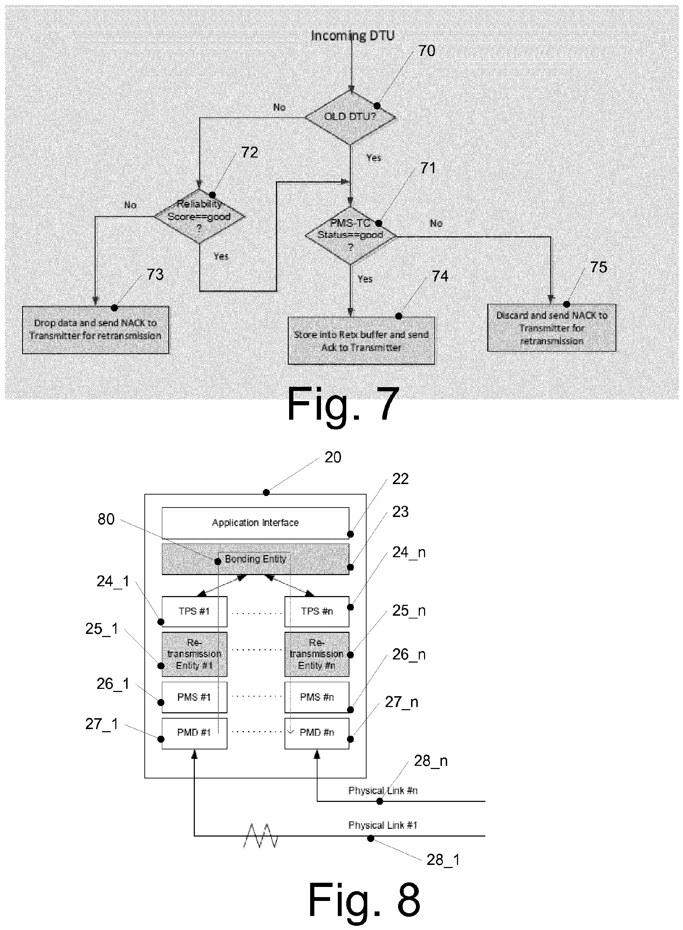

Such a scheme will now be further illustrated referring to the Figs. 6 and 7.

Fig. 6 shows a transmission example for a DSL system. In Fig. 6, PMD layer processing for a link n which is a link where an error occurs is shown. For the example of Fig. 6, a transmission using discrete multitone (DMT) symbols transmitted is illustrated, as such symbols serve as transmitted data entities in a DMT system. The fragments in this case are also referred to as data transmission units (DTUs). In the example of Fig. 6, a DMT symbol 60 transmitted on link n is corrupted. This error is detected as indicated by an arrow 61, and this error is propagated to other physical links, for which PMD layer processing, PMS layer processing and processing at the level of the retransmission entity (retransmission unit) is shown for a link k. As shown, during the corrupted DMT symbol on link n, a DMT symbol k is transmitted on physical link k, on which DTUs having sequence numbers 10 and 11 are fully encoded and DTUs 2 and 12 are partially encoded in DMT symbol k. In this example, DTU 2 is an old, i.e. retransmitted, DTU, while in the other DTUs are new DTUs.

On the PMS layer in link k, the DTUs are processed as shown. In the retransmission unit, based on the error propagation, DTU 2 is stored in a retransmission buffer, as successfully retransmitted DTU, while DTUs 10 and 11 are dropped, and a non-acknowledgement is sent for these DTUs to introduce and artificial delay. Therefore, in this embodiment retransmitted DTUs are treated differently in error propagation from new DTUs which are transmitted for the first time.

Fig. 7 is a flowchart illustrating an example for such a scheme in more detail. In particular, Fig. 7 illustrates a processing of an incoming DTU.

At 70, the method comprises checking if the DTU is an old DTU. If this is not the case, at 72 the method comprises checking the reliability score of the PMD layer. If the reliability score is good, the method continues at 71. If the reliability score is not good, indicating that the DTU is most likely corrupt or that an error was propagated to the respective link, at 73 the DTU is dropped, and a NACK is send for retransmission.

If it is an old DTU, the method continues at 71. At 71, the method comprises checking if the PMS layer status is good. This is the case, the data unit is stored in the retransmission buffer, and an acknowledgement is sent to the transmitter. Otherwise, at 75, the DTU is discarded, and a non-acknowledgement is sent to the transmitter to cause retransmission.

Implementations similar to Fig. 7 which takes parameters like status parameters into account in some embodiments may ensure that a DTU already retransmitted is not simply discarded, but stored. The error propagation as mentioned may be performed by modifying the reliability score, such that new DTUs are dropped and retransmitted.

Another example implementation possibility is illustrated in Fig. 8. In Fig. 8, a control message is broadcast to all bonded links is used to propagate the error. As indicated by an arrow 80 in Fig. 8, when an error is detected for example in physical link 28_1 at the PMD layer 27_1, a control message indicating that the error is detected is provided to the bonding entity 23. Bonding entity 23 then broadcasts an error detected message to all other bonded links of the same bonding group (for example to the path associated with link number n) in Fig. 8. This control message, as illustrated in Fig. 8, in some implementations may be passed all the way to the PMD layers of all physical links, such that an error can be injected into the incoming data stream of each bonded link, for example by deliberately corrupting a data entity. The control message may be in form of a control packet or control symbol, and may be generated and transmitted depending on the implementation of the layers shown in Fig. 8. In such an approach, error propagation is handled at a protocol level, i.e. at the bonding entity level, and no physical sideband signal enabling the PMD layers to communicate directly with each other is necessary in the implementation example of Fig. 8.

As can be seen, a plurality of approaches for propagating errors and introducing delays, for example by causing retransmission, in other bonded links are possible. The scope of protection is defined by the appended claims.

## Claims

1. A communication device (10; 11), comprising:
a plurality of signal paths (28_1 ... 28_n) to be coupled to a respective plurality of physical links on which data transmission units, DTUs, are received, and
a bonding entity (23; 212) providing bonding of the plurality of physical links, such that the plurality of physical links are used simultaneously between the communication device (10; 11) and a further communication device (10; 11),
wherein the communication device (10; 11), upon detection of an error causing retransmission on a first one of the plurality of physical links causes a delay in at least one second physical link of the plurality of physical links,
**characterized in that** causing the delay comprises requesting a retransmission of a DTU received on the at least one second physical link based on a reliability score evaluation,
wherein the retransmission of the DTU is requested when the reliability score indicates that the DTU on the at least one second physical link is most likely corrupt or an error was propagated to the at least one second physical link
wherein if the DTU is a retransmitted DTU, the reliability score evaluation is skipped.

2. The communication device (10; 11) of claim 1, wherein the at least one second physical link comprises all physical links of the plurality of physical links except the first physical link.

3. The device of any one of claims 1 or 2, wherein causing the delay comprises communicating between physical media dependent layers (27_1 ... 27_n; 28_1 ... 28_n) according to the OSI model of the plurality of signal paths (28_1 ... 28_n).

4. The device of claim 3, wherein the plurality of signal paths (28_1 ... 28_n) comprise receive paths, wherein detecting the error comprises detecting the error in a physical media dependent layer according to the OSI model of the signal path to be coupled to the first physical link.

5. The device of claim 4, wherein causing the delay comprises introducing an error in a physical media dependent layer according to the OSI model of the signal path to be coupled to the at least one second physical link.

6. The device of any one of claims 1 or 2, wherein causing the delay comprises providing an error message from a signal path to be coupled to the first physical link to the bonding entity (23; 212), and broadcasting a further error message from the bonding entity (23; 212) to a signal path to be coupled to the at least one second physical link.

7. A method, comprising:
detecting an error causing a retransmission in a first physical link of a plurality of bonded links on which data transmission units, DTUs, are received simultaneously from a first device to a second device, and
in response to detecting the error, causing a delay in at least one second physical link of the plurality of bonded links,
**characterized in that** causing the delay comprises requesting a transmission of a DTU received on the at least one second physical link based on a reliability score evaluation,
wherein the retransmission of the DTU is requested when the reliability score indicates that the DTU on the at least one second physical link is most likely corrupt or an error was propagated to the at least one second physical link
wherein if the DTU is a retransmitted DTU, the reliability score evaluation is skipped.

8. The method of claim 7, wherein causing the delay comprises communicating between physical media dependent layers (27_1 ... 27_n; 28_1 ... 28_n) according to the OSI model of a plurality of signal paths (28_1 ... 28_n) coupled to the plurality of physical links.

9. The method of claim 8, wherein the plurality of signal paths (28_1 ... 28_n) comprise receive paths, wherein detecting the error comprises detecting the error in a physical media dependent layer according to the OSI model of the signal path to be coupled to the first physical link.

10. The method of claim 7, wherein causing the delay comprises providing an error message from a signal path coupled to the first physical link to the bonding entity (23; 212), and broadcasting a further error message from the bonding entity (23; 212) to a signal path coupled to the at least one second physical link.

## Patentansprüche

1. Kommunikationsvorrichtung (10; 11), Folgendes umfassend:
eine Vielzahl von Signalpfaden (28_1 ... 28_n), die mit einer entsprechenden Vielzahl von physikalischen Verbindungen zu koppeln sind, auf denen Datenübertragungseinheiten (DTUs) empfangen werden, und
eine Bonding-Einheit (23; 212), die das Bonding der Vielzahl von physikalischen Verbindungen bereitstellt,
so dass die Vielzahl von physikalischen Verbindungen gleichzeitig zwischen der Kommunikationsvorrichtung (10; 11) und einer weiteren Kommunikationsvorrichtung (10; 11) verwendet wird,
wobei die Kommunikationsvorrichtung (10; 11) bei Erkennung eines Fehlers, der eine Neuübertragung auf einer ersten der Vielzahl von physikalischen Verbindungen verursacht, eine Verzögerung in mindestens einer zweiten physikalischen Verbindung der Vielzahl von physikalischen Verbindungen verursacht,
**dadurch gekennzeichnet, dass** das Verursachen der Verzögerung das Anfordern einer Neuübertragung einer DTU, die auf der mindestens einen zweiten physikalischen Verbindung empfangen wurde, basierend auf einer Bewertung des Zuverlässigkeitsgrads, umfasst, wobei die Neuübertragung der DTU angefordert wird, wenn der Zuverlässigkeitsgrad anzeigt, dass die DTU auf der mindestens einen zweiten physikalischen Verbindung höchstwahrscheinlich beschädigt ist oder ein Fehler auf die mindestens eine zweite physikalische Verbindung propagiert wurde, wobei, falls die DTU eine erneut übertragene DTU ist, die Bewertung des Zuverlässigkeitsgrads übersprungen wird.

2. Kommunikationsvorrichtung (10; 11) nach Anspruch 1, wobei die mindestens eine zweite physikalische Verbindung alle physikalischen Verbindungen der Vielzahl von physikalischen Verbindungen, außer der ersten physikalischen Verbindung, umfasst.

3. Vorrichtung nach einem der Ansprüche 1 oder 2, wobei das Verursachen der Verzögerung das Kommunizieren zwischen physikalischen medienabhängigen Schichten (27_1 ... 27_n; 28_1 ... 28_n) gemäß dem OSI-Modell der Vielzahl von Signalpfaden (28_1 ... 28_n) umfasst.

4. Vorrichtung nach Anspruch 3, wobei die Vielzahl von Signalpfaden (28_1 ... 28 n) Empfangspfade umfasst, wobei das Erkennen des Fehlers das Erkennen des Fehlers in einer physikalischen medienabhängigen Schicht gemäß dem OSI-Modell des Signalpfads, der mit der ersten physikalischen Verbindung zu koppeln ist, umfasst.

5. Vorrichtung nach Anspruch 4, wobei das Verursachen der Verzögerung das Einführen eines Fehlers in eine physikalische medienabhängige Schicht gemäß dem OSI-Modell des Signalpfads, der mit der mindestens einen zweiten physikalischen Verbindung zu koppeln ist, umfasst.

6. Vorrichtung nach einem der Ansprüche 1 oder 2, wobei das Verursachen der Verzögerung das Bereitstellen einer Fehlermeldung von einem Signalpfad, der mit der ersten physikalischen Verbindung zu koppeln ist, an die Bonding-Einheit (23; 212) und das Senden einer weiteren Fehlermeldung von der Bonding-Einheit (23; 212) an einen Signalpfad, der mit der mindestens einen zweiten physikalischen Verbindung zu koppeln ist, umfasst.

7. Verfahren, Folgendes umfassend:
Erkennen eines Fehlers, der eine Neuübertragung in einer ersten physikalischen Verbindung einer Vielzahl von gebondeten Verbindungen verursacht, auf denen Datenübertragungseinheiten (DTUs) gleichzeitig von einer ersten Vorrichtung zu einer zweiten Vorrichtung empfangen werden,
und als Reaktion auf das Erkennen des Fehlers, Verursachen einer Verzögerung in mindestens einer zweiten physikalischen Verbindung der Vielzahl von verbundenen Verbindungen,
**dadurch gekennzeichnet, dass** das Verursachen der Verzögerung das Anfordern einer Übertragung einer DTU, die auf der mindestens einen zweiten physikalischen Verbindung empfangen wurde, basierend auf einer Bewertung des Zuverlässigkeitsgrads, umfasst, wobei die Neuübertragung der DTU angefordert wird, wenn der Zuverlässigkeitsgrad anzeigt, dass die DTU auf der mindestens einen zweiten physikalischen Verbindung höchstwahrscheinlich beschädigt ist oder ein Fehler auf die mindestens eine zweite physikalische Verbindung propagiert wurde, wobei, falls die DTU eine erneut übertragene DTU ist, die Bewertung des Zuverlässigkeitsgrads übersprungen wird.

8. Verfahren nach Anspruch 7, wobei das Verursachen der Verzögerung das Kommunizieren zwischen physikalischen medienabhängigen Schichten (27 1 ... 27_n; 28_1 ... 28_n) gemäß dem OSI-Modell einer Vielzahl von Signalpfaden (28 1 ... 28 n) umfasst, die mit der Vielzahl von physikalischen Verbindungen gekoppelt sind.

9. Verfahren nach Anspruch 8, wobei die Vielzahl von Signalpfaden (28_1 ... 28_n) Empfangspfade umfasst, wobei das Erkennen des Fehlers das Erkennen des Fehlers in einer physikalischen medienabhängigen Schicht gemäß dem OSI-Modell des Signalpfads, der mit der ersten physikalischen Verbindung zu koppeln ist, umfasst.

10. Verfahren nach Anspruch 7, wobei das Verursachen der Verzögerung das Bereitstellen einer Fehlermeldung von einem Signalpfad, der mit der ersten physikalischen Verbindung gekoppelt ist, an die Bonding-Einheit (23; 212) und das Senden einer weiteren Fehlermeldung von der Bonding-Einheit (23; 212) an einen Signalpfad, der mit der mindestens einen zweiten physikalischen Verbindung gekoppelt ist, umfasst.

## Revendications

1. Dispositif de communication (10 ; 11), comprenant :
une pluralité de trajets de signal (28_1 ... 28_n) devant être couplés à une pluralité respective de liaisons physiques sur lesquelles des unités de transmission de données, DTU, sont reçues, et
une entité de combinaison (23 ; 212) chargée de combiner la pluralité de liaisons physiques, de telle façon que les liaisons physiques de la pluralité de liaisons physiques soient utilisées simultanément entre le dispositif de communication (10 ; 11) et un autre dispositif de communication (10 ; 11),
le dispositif de communication (10 ; 11), en cas de détection d'une erreur provoquant une retransmission sur une première liaison physique de la pluralité de liaisons physiques, produisant un retard dans au moins une deuxième liaison physique de la pluralité de liaisons physiques,
**caractérisé en ce que** la production du retard comprend l'étape consistant à demander une retransmission d'une DTU reçue sur ladite au moins une deuxième liaison physique en fonction d'une évaluation de note de fiabilité,
la retransmission de la DTU étant demandée lorsque la note de fiabilité indique que la DTU présente sur ladite au moins une deuxième liaison physique est vraisemblablement altérée ou qu'une erreur s'est propagée vers ladite au moins une deuxième liaison physique,
dans lequel, si la DTU est une DTU retransmise, l'évaluation de note de fiabilité est omise.

2. Dispositif de communication (10 ; 11) selon la revendication 1, dans lequel ladite au moins une deuxième liaison physique comprend toutes les liaisons physiques de la pluralité de liaisons physiques, à l'exception de la première liaison physique.

3. Dispositif selon l'une quelconque des revendications 1 et 2, dans lequel la production du retard comprend la communication entre couches dépendant du support physique (27_1 ... 27_n ; 28_1 ... 28_n) selon le modèle OSI de la pluralité de trajets de signal (28_1 ... 28_n).

4. Dispositif selon la revendication 3, dans lequel la pluralité de trajets de signal (28_1 ... 28_n) comprend des trajets de réception, la détection de l'erreur comprenant la détection de l'erreur dans une couche dépendant du support physique selon le modèle OSI du trajet de signal devant être couplé à la première liaison physique.

5. Dispositif selon la revendication 4, dans lequel la production du retard comprend l'introduction d'une erreur dans une couche dépendant du support physique selon le modèle OSI du trajet de signal devant être couplé à ladite au moins une deuxième liaison physique.

6. Dispositif selon l'une quelconque des revendications 1 et 2, dans lequel la production du retard comprend les étapes consistant à faire circuler un message d'erreur entre un trajet de signal devant être couplé à la première liaison physique et l'entité de combinaison (23 ; 212), et à diffuser un autre message d'erreur entre l'entité de combinaison (23 ; 212) et un trajet de signal devant être couplé à ladite au moins une deuxième liaison physique.

7. Procédé, comprenant les étapes consistant à :
détecter une erreur provoquant une retransmission sur une première liaison physique d'une pluralité de liaisons combinées sur lesquelles des unités de transmission de données, DTU, sont reçues simultanément, celles-ci circulant d'un premier dispositif vers un deuxième dispositif, et
en réponse à la détection de l'erreur, provoquer un retard dans au moins une deuxième liaison physique de la pluralité de liaisons combinées,
**caractérisé en ce que** la production du retard comprend une demande de transmission d'une DTU reçue sur ladite au moins une deuxième liaison physique en fonction d'une évaluation de note de fiabilité,
la retransmission de la DTU étant demandée lorsque la note de fiabilité indique que la DTU présente sur ladite au moins une deuxième liaison physique est vraisemblablement altérée ou qu'une erreur s'est propagée vers ladite au moins une deuxième liaison physique,
dans lequel, si la DTU est une DTU retransmise, l'évaluation de note de fiabilité est omise.

8. Procédé selon la revendication 7, dans lequel la production du retard comprend la communication entre couches dépendant du support physique (27 1 ... 27_n ; 28_1 ... 28_n) selon le modèle OSI de la pluralité de trajets de signal (28_1 ... 28_n) couplés à la pluralité de liaisons physiques.

9. Procédé selon la revendication 8, dans lequel la pluralité de trajets de signal (28_1 ... 28_n) comprend des trajets de réception, la détection de l'erreur comprenant la détection de l'erreur dans une couche dépendant du support physique selon le modèle OSI du trajet de signal devant être couplé à la première liaison physique.

10. Procédé selon la revendication 7, dans lequel la production du retard comprend les étapes consistant à faire circuler un message d'erreur entre un trajet de signal couplé à la première liaison physique et l'entité de combinaison (23 ; 212), et à diffuser un autre message d'erreur entre l'entité de combinaison (23 ; 212) et un trajet de signal couplé à ladite au moins une deuxième liaison physique.
